# EUROPÄISCHE PATENTSCHRIFT

(11) **EP 2 310 165 B1**
(45) Veröffentlichungstag und Bekanntmachung des Hinweises auf die Patenterteilung: **28.03.2012**
(21) Anmeldenummer: 09775880.9
(22) Anmeldetag: 23.05.2009
(51) Int. Cl.: B23P 17/06, B23D 31/00, E04C 5/01

(54) **VERFAHREN ZUR HERSTELLUNG VON STAHLFASERN**
METHOD FOR PRODUCING STEEL FIBRES
PROCÉDÉ DE PRODUCTION DE FIBRES MÉTALLIQUES

(30) Priorität: 23.07.2008 DE 102008034250
(43) Veröffentlichungstag der Anmeldung: 20.04.2011
(73) Patentinhaber: CENT & CENT GMBH & CO. KG, 89155 Erbach (DE)
(72) Erfinder: STAHL, Karl-Hermann, 89269 Vöhringen (DE)
(74) Vertreter: Dziewior, Joachim
(86) Internationale Anmeldenummer: PCT/DE2009/000736
(87) Internationale Veröffentlichungsnummer: WO 2010/009687

(56) Entgegenhaltungen:
- EP-A- 0 392 039
- EP-A- 0 529 105
- EP-A- 0 608 013
- EP-A- 1 840 291
- WO-A-2008/135002
- DE-A1- 1 627 152
- DE-A1- 2 651 126
- DE-U1- 9 000 846
- JP-A- 58 143 910
- JP-A- 61 125 719

## Beschreibung

Die Erfindung betrifft ein Verfahren zur Herstellung von Stahlfasern, vorzugsweise zur Verwendung als Betonzusatzstoff, sowie zu deren Zuführung bei der Herstellung von Stahlfaserbeton, bei welchem zunächst ein Blechband zur Formung der Stahlfasern entweder einseitig oder beidseitig gekerbt wird, wodurch Stahlfaseradern ausgebildet werden, die zunächst noch durch Stege miteinander verbunden sind, wobei weiter zur anschließenden Umbildung der Stege zu dünnen, leicht voneinander trennbaren und beim Abtrennen gratarme und bruchrauhe Trennflächen bildenden Trennstegen das Stahlfaserband einem Walkprozess unterworfen wird, bei welchem jeder Steg einer mehrfachen Biegeverformung um seine Längsachse derart unterworfen wird, dass sich im Bereich der Stege Anrisse durch Dauerbruch ausbilden und somit der Trennsteg entsteht.

Ein derartiges Verfahren und ein auf diese Art hergestelltes Stahltaserband sowie eine auf diese Art hergestellte Stahlfaser sind durch die WO 2008/135002 A bekannt geworden. Dieses Dokument fällt unter Artikel 54 (3) EPÜ.

Weiter ist es aus der DE 2651126A1 bekannt, daß ein bereits gekerbtes Stahlband vor dem endgültigen Trennen der Stahlfasern wärmebehandelt wird, um ein gewünschtes Feingefüge einzustellen, welches das nachfolgende Aufspalten des gekerbten Bandes zu einzelnen Drähten in der im einzelnen beschriebenen Weise ermöglicht. Eine Erzeugung von Ermüdungsrissen in den Kerbgründen erfolgt dort nicht.

Die JP 58143910 A beschreibt ein Verfahren zum verzug- und gratfreien Trennen/Teilen eines Blechbandes in mehrere Blechstreifen, bei dem in einem ersten Schritt im Blechband gestufte Kerben durch entsprechende Schneidwalzen erzeugt werden und das Blechband anschließend in einem zweiten Schritt im Durchlauf durch mehrere Rollen einem Walkprozeß unterzogen wird, bei dem das Blechband entlang der Stufen in mehrere Blechstreifen verzug- und gratfrei getrennt wird.

Auch die JP 61125719 A beschreibt ein Verfahren zum gratfreien Trennen/Teilen eines Blechbandes in mehrere Blechstreifen. Auch hier wird das Blechband zuerst im Durchlauf durch einen von entsprechend profilierten Walzen gebildeten Spalt beidseitig gekerbt. Im Anschluss erfolgt das Teilen des Blechbandes in mehrere Blechstreifen an den Positionen der Kerben durch einen Scherprozeß im Durchlauf durch einen gestuften Spalt entsprechend profilierter Rollen.

Die DE 1627152 A1 beschreibt ein Verfahren zum grat- und verzugsfreien Trennen von einem Metallband oder einer Metalltafel quer zur Vorschubrichtung in Streifen. Dabei wird das Metallband in einem ersten Schritt einseitig, quer zur Vorschubrichtung gekerbt und in einem zweiten Schritt ein Streifen durch Schwenkbewegung eine Brechbalkens abgetrennt.

In vielen Einsatzbereichen hat es sich als vorteilhaft erwiesen, statt oder zusätzlich zu den üblichen Baustahlmatten Stahlfasern dem Beton beizumischen, wodurch insbesondere die Bildung von Mikrorissen im jungen Beton verhindert werden. Darüber hinaus ergeben sich durch die einfache Verarbeitung enorme Arbeitseinsparungen und eine höhere Lebensdauer des Betons. Je nach Anwendungsfall können auch eine höhere Zug- und Biegefestigkeit sowie eine höhere Tragfähigkeit erreicht werden.

Gleichwohl ist die Herstellung der Stahlfasern aufwendig, da diese entweder gefräst, als Blechfasern aus Blechen oder Bändern geschnitten, gestanzt und verformt oder als Drahtfasern einzeln oder im Paket verformt, gebogen und abgelängt werden müssen. Die Verformung dient dabei der Verankerung der Stahlfasern im Beton.

Der Erfindung liegt die Aufgabe zugrunde, ein Verfahren der eingangs genannten Art derart weiterzubilden, dass eine einfache und kostengünstige Herstellung von solchen Stahlfasern ermöglicht wird.

Diese Aufgabe wird nach der Erfindung dadurch gelöst, dass die Stahlfaseradern bei der Kerbung mit Verankerungen versehen werden, die durch Unterbrüche bei der Kerbung gebildet werden.

Der durch die Erfindung erreichte Vorteil besteht zunächst darin, dass als Ausgangsmaterial für die Stahlfasern ein Blechband zum Einsatz kommt, wodurch nicht nur ein günstiges Ausgangsmaterial zur Verfügung steht, sondern darüber hinaus eine Ausformung von einer Vielzahl von Stahlfaseradern erfolgen kann.

Dabei ergibt sich im Rahmen der Erfindung als weiterer Vorteil die Möglichkeit, dass die Stahlfaseradern bei der Kerbung gleich mit Verankerungen versehen werden, die durch Unterbrüche bei der Kerbung gebildet werden. Diese Verankerungen stellen damit örtliche Querschnittsvergrößerungen durch Aufstauchung beim Kerben sowie im Vergleich zum gekerbten Querschnitt der Stahlfasern dar. Diese Unterbrüche können bei den Kerbnasen im Walzwerkzeug vorgesehen werden, wodurch die Ausbildung der Stahlfaseradern mit Verankerungen in einem Arbeitsschritt möglich ist, wobei die Positionierung der Verankerungen an den Enden der Stahlfasern besonders wirkungsvoll ist.

Nach einer ersten Ausführungsform der Erfindung erfolgt das Verfahren derart, dass die Stahlfaseradern quer zur Längsrichtung des Blechbandes ausgeformt werden.

Hierbei besteht in weiter vorteilhafter Ausgestaltung der Erfindung die Möglichkeit, dass das nach der Kerbung mit Verankerungen versehene, sich über die gesamte Breite des Blechbandes erstreckende Stahlfaseradernband unter Bildung von zwei oder mehr Stahlfaserbändern durch Trennmesser geteilt wird.

Hierbei ist es weiter von Vorteil, wenn die Aufteilung zu mehreren Stahlfaserbändern vor dem Walkprozess erfolgt.

Im weiteren Verfahrensablauf empfiehlt es sich, dass die Stahlfaserbänder nach dem Walkprozess eine Formwalze zur Formgebung der Stahlfasern (gekröpfte Enden, aufgestauchte Enden, Wellenform usw.) entsprechend dem Einsatzzweck durchlaufen.

Bei diesem Verfahrensablauf besteht schließlich die Möglichkeit, dass die Stahlfaserbänder nach vollständiger Konfektionierung aufgewickelt werden. In der Form des Stahlfaserbandes als Scheibe steht eine große Menge geordnet vorliegender, leicht und schnell trennbarer Stahlfasern raumsparend und gut transportabel für den Transport zum Ort ihrer Verwendung zur Verfügung. Daher sieht die Erfindung weiter vor, dass die Vereinzelung der Stahlfaserbänder zu Stahlfasern am Ort der Betonzubereitung erfolgt. Damit können Einrichtungen und Maßnahmen, mit denen heute eine "Igelbildung" (Klumpenbildung von Stahlfasern im Beton) vermieden werden sollen, entfallen. Selbstverständlich ist es auch möglich, die Vereinzelung bereits in der Fertigungslinie vorzunehmen, soweit dies wünschenswert oder erforderlich ist.

Nach einer alternativen Ausgestaltung der Erfindung können die Stahlfaseradern jedoch auch in Längsrichtung des Blechbandes ausgeformt werden.

Hierbei kann in einfacher Weise nach dem Walkvorgang optional die Ober- und/oder die Unterseite des Bandes in der Art einer Rändelung aufgerauht werden, wobei dies jedoch in vergleichbarer Weise auch bei der zuvor beschriebenen Alternative mit quer zur Längsrichtung des Blechbandes angeordneten Stahlfaseradern möglich ist. Dadurch kann eine bessere Haftung im Beton erreicht werden.

Nach diesen Verfahrensschritten könnte das Stahlfaserband optional Lage auf Lage gewickelt werden und die nachfolgenden Verfahrensschritte könnten dann am Ort der Betonzubereitung mit einer geeigneten Vorrichtung vorgenommen werden.

Weiter sieht das Verfahren hierbei vor, dass anschließend die in Längsrichtung des Bandes ausgerichteten Stahlfaseradern voneinander getrennt werden.

Im weiteren Verlauf des Verfahrens ist vorgesehen, dass die Stahlfaseradern nach ihrer Trennung durch ein Formwerkzeug einer Formgebung entsprechend dem Einsatzzweck unterworfen werden. Hierbei kann es sich um eine Kröpfung der Stahlfaserenden, um eine in Längsrichtung verlaufende wellenförmige Gestalt oder dergleichen mehr handeln.

Schließlich werden bei diesem Verfahrensablauf die Stahlfaseradern nach ihrer Formgebung auf das gewünschte Maß abgelängt, so dass die einzelnen Stahlfasern für die weitere Anwendung einsatzbereit sind.

Die Kerbung des Blechbandes erfolgt vorteilhafterweise V-förmig, wobei der Kerbspitzenwinkel W zwischen 30° und 120° betragen sollte. Als besonders günstig hat sich hierbei ein Kerbspitzenwinkel W von etwa 60° erwiesen.

Die Dicke des Steges sollte vorteilhafterweise 20 % bis 95 % der Dicke des Bandes betragen.

Die Tiefe der V-förmigen Kerben wird im Rahmen der Erfindung vorteilhafterweise so gewählt, dass die Anrisse durch Dauerbruch in Abhängigkeit von der Festigkeit des Blechbandes und dem Einsatzzweck der Stahlfaser erreicht werden.

Weiter hat es sich im Rahmen der Erfindung als vorteilhaft erwiesen, wenn der Walkprozess eine bezüglich der Ebene des Stahlfaserbandes einseitige, mehrfache Biegeverformung bis zum Auftreten von Dauerbruchanrissen im Bereich der Stege am Kerbgrund umfasst. Alternativ kann der Walkprozess auch eine bezüglich der Ebene des Stahlfaserbandes beidseitige, mehrfache Biegeverformung bis zum Auftreten von Dauerbruchanrissen im Bereich der Stege am Kerbgrund umfassen.

Der Walkprozess kann dabei derart ablaufen, dass die mehrfache Biegeverformung der Stege um jeweils gleiche Winkelbeträge erfolgt. Je nach Anwendungsfall und Materialbeschaffenheit kann es stattdessen jedoch auch vorteilhafter sein, wenn die mehrfache Biegeverformung der Stege um jeweils zunehmende oder auch abnehmende Winkelbeträge ein- oder beidseitig erfolgt.

Die mehrfache Biegeverformung der Stege sollte zweckmäßigerweise unter einem Winkel kleiner als der Kerbwinkel erfolgen.

Um die Stahlfaseradern vollständig voneinander zu trennen, kann der Trennsteg durch geringes, gegeneinander gerichtetes Auslenken von nebeneinander liegenden Stahlfaseradern gebrochen werden. Im einzelnen kann der Trennsteg bei den quer zur Bandrichtung liegenden Stahlfasern in einer Trennvorrichtung im Reißverschlußprinzip durchtrennt und damit die Stahlfasern vereinzelt werden, während bei den längs zur Bandrichtung liegenden Stahlfaseradern die Trennung durch Formrollen durch geringes, gegeneinander gerichtetes Auslenken von nebeneinander liegenden Stahlfaseradern erfolgt und danach die Stahlfaser geformt und abgelängt wird.

Als Vormaterial wird vorzugsweise bandförmiges Halbzeug aus Metall eingesetzt.

In vorrichtungsmäßiger Hinsicht wird die der Erfindung zugrunde liegende Aufgabe gelöst durch eine aus mehreren parallel zueinander angeordneten, über Stege miteinander verbundenen Stahlfaseradern bestehende, nach wenigstens einen der voranstehenden Verfahrensansprüchen gefertigtes Stahlfaserband aus Metall, das gekennzeichnet ist durch bandförmiges, als Vormaterial eingesetztes Halbzeug, das zur Ausbildung der Stahlfaseradern einseitig oder beidseitig gekerbt ist und bei der Kerbung mit Verankerungen versehen wird, wobei die Stege durch mehrfache Biegeverformungen mittels eines Walkprozesses zu dünnen, leicht voneinander trennbaren und beim Abtrennen gratarme und bruchrauhe Trennflächen bildenden, einen Dauerbruch oder Dauerbruchanrisse aufweisenden Trennstegen umgeformt sind und die Stahlfaserbänder bzw. Stahlfaseradernbänder einer Formgebung unterworfen sind, wobei bei der Vereinzelung der Stahlfaserbänder bzw.Stahlfaseradernbänder als Beimengung zu Beton geeignete Stahlfasern anfallen.

Durch den Walkprozess werden auf den Kerbgründen Dauerbruchanrisse erzeugt, wodurch die Stege geschwächt werden. Die verbleibenden Stegreste - Trennstege genannt - lassen sich sehr dünn gestalten, weil sie im Bereich der neutralen Faser des Biegevorgangs liegen; die Stahlfaseradern lassen sich somit später leicht voneinander trennen und zuverlässig vereinzeln.

Als metallisches Material sind hier Werkstoffe auf Edelstahlbasis oder Eisenbasis in allen marktüblichen Festigkeitszuständen vorgesehen. Soweit es der Einsatzzweck erfordert, können als metallisches Material auch beschichtete Metallbänder, insbesondere verzinktes oder verkupfertes Stahlband vorgesehen sein. In jedem Fall ist es zweckmäßig, dass als metallisches Material Werkstoffe vorgesehen sind, mit denen für die jeweilige Werkstoffgruppe auch besonders hohe Festigkeitsewerte durch Walzen erzielt werden können.

Schließlich betrifft die Erfindung eine nach dem vorbeschrieben Verfahren hergestellte Stahlfaser. Sie ist dadurch gekennzeichnet, daß sie aus bandförmigem, als Vormaterial eingesetztem Halbzeug gebildet ist, das zur Ausbildung von zunächst noch durch Stege miteinander verbundenen Stahlfaseradern einseitig oder beidseitig gekerbt ist und bei der Kerbung mit Verankerungen versehen wird, wobei die Stege durch mehrfache Biegeverformungen mittels eines Walkprozesses zu dünnen, leicht voneinander trennbaren und beim Abtrennen gratarme und bruchrauhe Trennflächen bildenden, einen Dauerbruch aufweisenden Trennstegen umgeformt sind. Dadurch bildet diese Stahlfaser einen völlig neuen Stahlfasertyp.

Hierbei empfiehlt es sich, daß die Stahlfaser eine für die Beimengung zu Beton geeignete, darin Verankerungen bildende Formgebung aufweist.

Im Folgenden wird die Erfindung durch in der Zeichnung dargestellte Ausführungsbeispiele näher erläutert; es zeigen:
- Fig. 1: eine schematische Darstellung des erfindungsgemäßen Verfahrensablaufs in einer ersten Ausführungsform, mit quer zur Bandrichtung liegender Stahlfaserader,
- Fig. 2: eine der Figur 1 entsprechende Darstellung des Verfahrensablaufs in einer alternativen Ausgestaltung, mit längs zur Bandrichtung liegender Stahlfaserader,
- Fig. 3: eine Detaildarstellung der Kerbwalze, in Abrollung dargestellt,
- Fig. 4: ein nur teilweise wiedergegebenes, zur Herstellung des Stahlfaserbandes bzw. Stahlfaseradernbandes vorgesehenes, gekerbtes Band im Querschnitt mit bereits vorgenommener Kerbung,
- Fig. 5: das dem Walkprozess unterworfene, zur Herstellung des Stahlfaserbandes bzw. Stahlfaseradernbandes vorgesehenes, gekerbtes Band im Zustand einer Biegeverformung, in der Teilfigur a) für längs, in der Teilfigur b) für quer zur Bandrichtung liegende Stahlfaseradern,
- Fig. 6: eine Anordnung zur Durchtrennung der Trennstege des Stahlfaserbandes bzw. Stahlfaseradernbandes,
- Fig. 7: einen Schnitt durch das Drahtband im Bereich einer Kerbe in nur teilweiser Darstellung,
- Fig. 8: eine Trennvorrichtung zur Stahlfaservereinzelung,
- Fig. 9: eine einzelne Stahlfaser in unterschiedlichen Ansichten,
- Fig. 10: einzelne Stahlfasern in unterschiedlicher Umformung,
- Fig. 11: eine Stahlfaser mit endseitiger Querschnittsvergrößerung im Vergleich mit dem Stahlfaserquerschnitt.

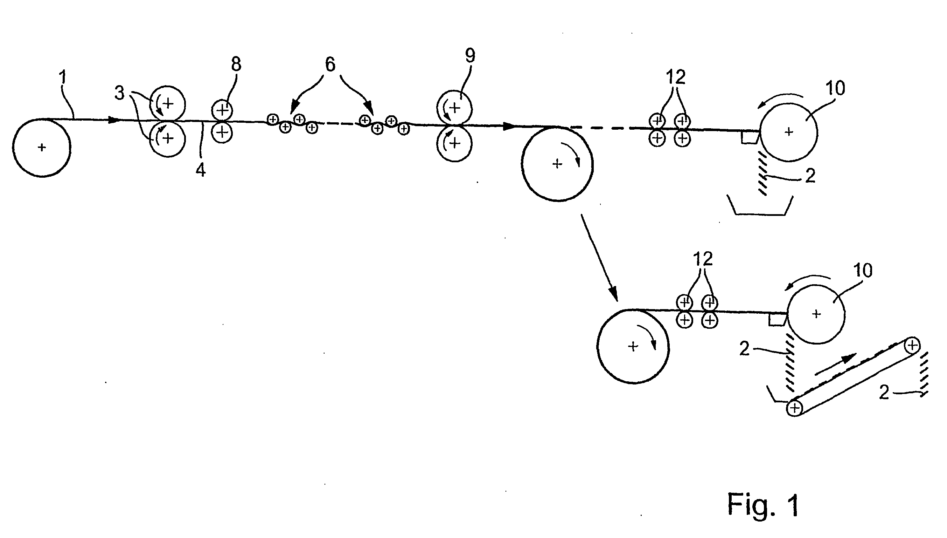

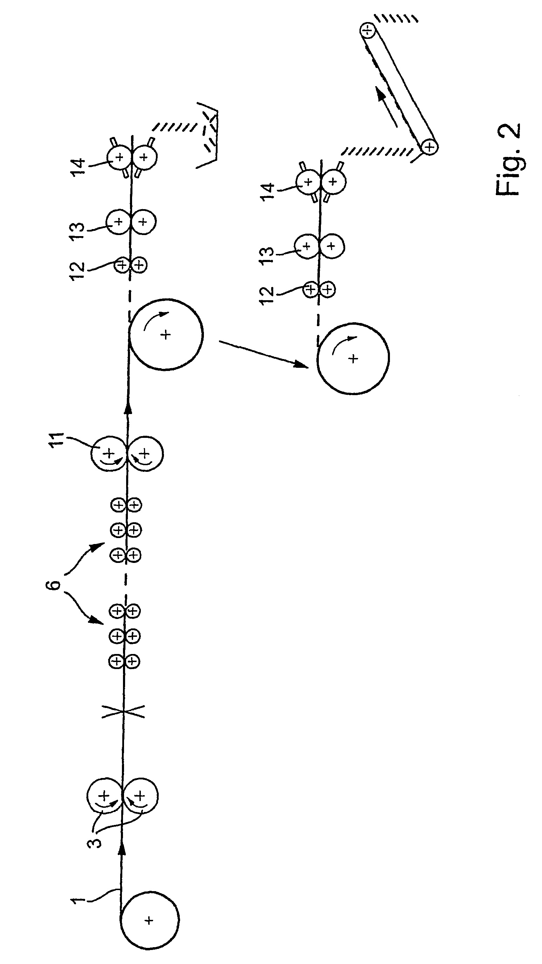

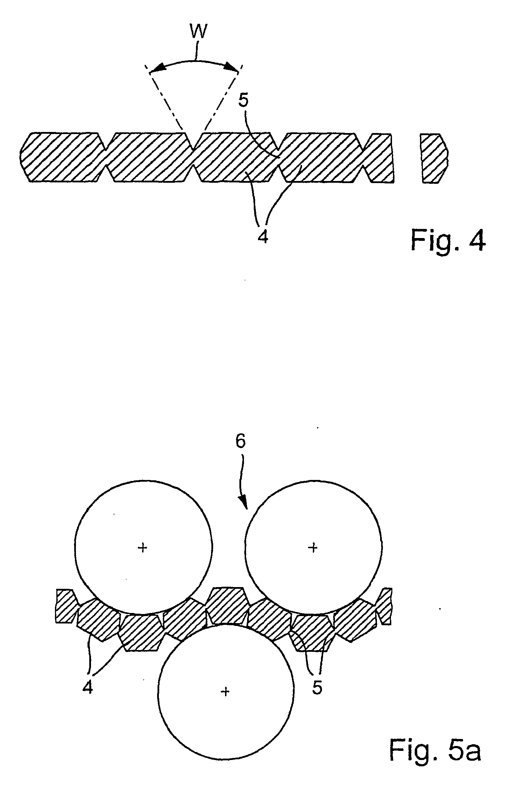

Das in der Zeichnung insbesondere in den Figuren 1 und 2 schematisch angedeutete Verfahren dient zur Herstellung von Stahlfasern 2, die vorzugsweise als Betonzusatzstoff Verwendung finden. Dazu wird zunächst ein Blechband 1 zur Formung der Stahlfasern 2 entweder einseitig oder beidseitig zwischen Walzen 3 gekerbt, wodurch die Stahlfaseradern 4 mit Verankerungen 7 ausgebildet werden. Hierbei sind die Stahlfaseradern 4 zunächst noch durch Stege 5 miteinander verbunden, wie dies aus der Fig. 4 hervorgeht.

Zur anschließenden Umbildung der Stege 5 zu dünnen, leicht voneinander trennbaren und beim Abtrennen gratarme und bruchrauhe Trennflächen bildenden Trennstegen wird das von den Stahlfaseradern 4 gebildete Stahlfaserband einem Walkprozess unterworfen, bei welchem jeder Steg 5 einer mehrfachen Biegeverformung um seine Längsachse unterworfen wird, wie dies in der Zeichnung mit der Bezugsziffer 6 angedeutet ist. Dadurch bilden sich im Bereich der Stege 5 Anrisse durch Dauerbruch, wodurch der Trennsteg entsteht. Zwischen den Kerben erfolgt im übrigen ein Anritzen der Oberfläche, damit zur Verlängerung des Kerbgrundes auch dort ein Dauerbruch ausgelöst wird.

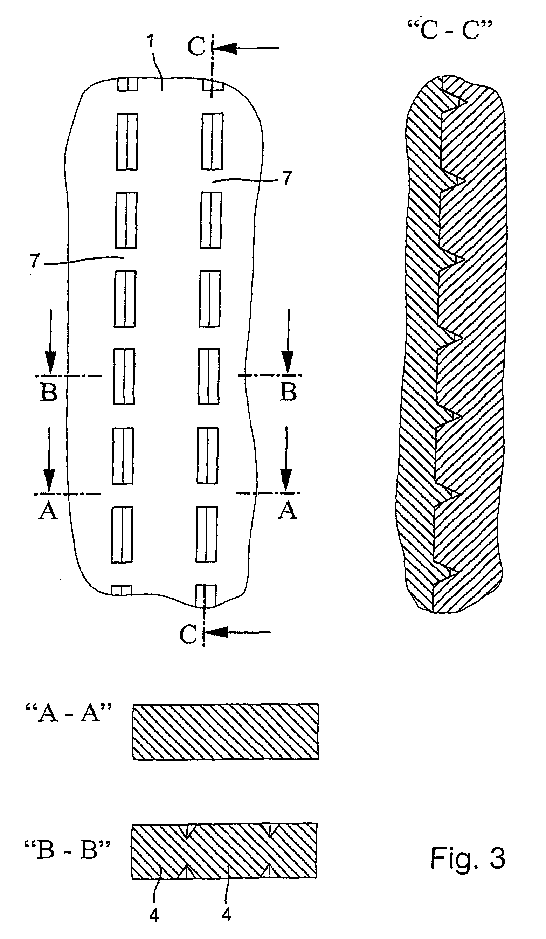

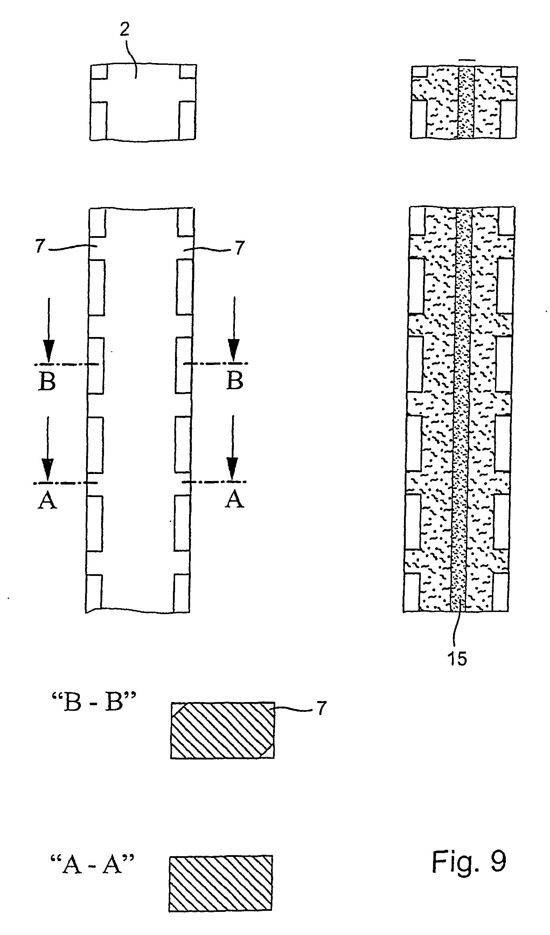

Die Stahlfaseradern 4 können bei ihrer Kerbung zusätzlich mit Verankerungen 7 in Form von Querschnittsvergrößerungen im Vergleich mit dem Stahlfaserquerschnitt versehen werden, wie dies in den Figuren 3 und 9 zu sehen ist. Diese dienen der besseren Verankerung der Stahlfasern 2 im Beton und können - dem Anwendungszweck entsprechend - an geeigneter Stelle positioniert werden. In Fig. 9 ist ferner die Walkbruchoberfläche mit 15 bezeichnet.

Bei der in der Figur 1 dargestellten Ausgestaltung der Erfindung werden die Stahlfaseradern 4 quer zur Längsrichtung des Blechbandes 1 ausgeformt. Je nach gewünschter Länge der Stahlfasern 2 können diese sich entweder über die gesamte Breite des Blechbandes 1 erstrecken; es können jedoch auch Trennmesser 8 vorgesehen sein, durch die das Stahlfaseradernband 1 in zwei oder mehrere Stahlfaserbänder unterteilt wird. Diese Teilung des Stahlfaseradernbandes erfolgt zweckmäßigerweise vor dem Walkprozess.

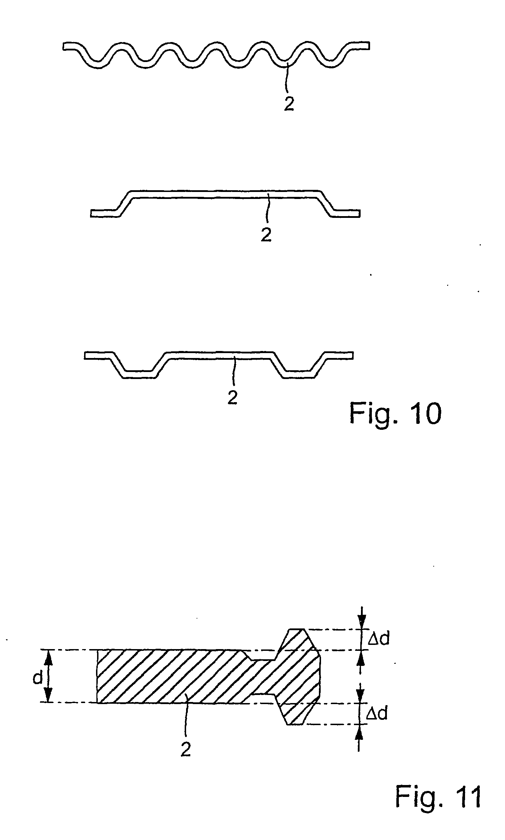

Nach dem Walkprozess durchläuft das Stahlfaseradernband bzw. durchlaufen die Stahlfaserbänder eine Formwalze 9, durch die die Stahlfasern 4 eine dem späteren Einsatzzweck entsprechende Formgebung erhalten. Gemäß den Darstellungen in der Figur 10 können die Enden der Stahlfasern 2 beispielsweise gekröpft ausgebildet sein; ebenso können die Stahlfasern 2 in eine wellenförmige Gestalt oder in anderer geeigneter Weise umgeformt sein. Insbesondere können die Stahlfaserenden umgestaltet sein und zwar in der Art einer Verbreiterung, wie dies in der Fig. 11 angedeutet ist. Diese Verbreiterung bzw. Verdickung führt zu einer besonders wirksamen Verankerung im Beton.

Nach vollständiger Konfektionierung werden die Stahlfaserbänder Lage auf Lage gewickelt, wodurch diese einfach und raumsparend zum späteren Einsatzort verbracht werden können.

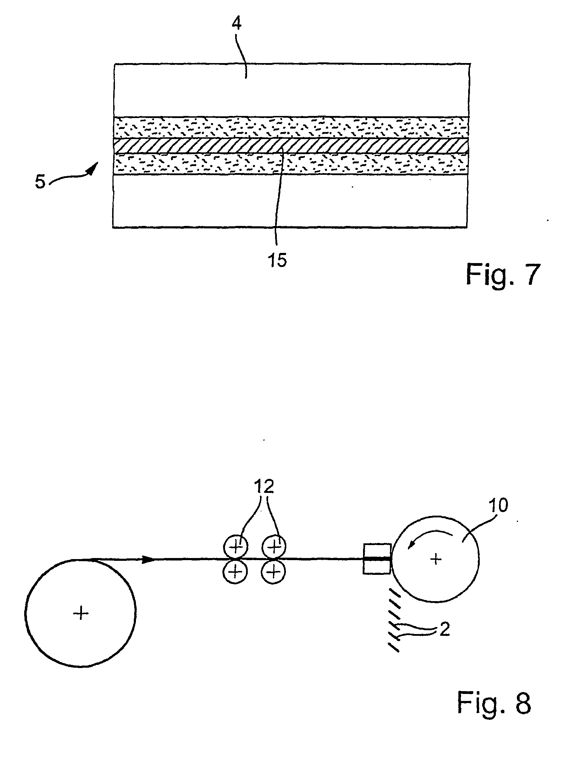

Die Vereinzelung der Stahlfaserbänder zu Stahlfasern 2 erfolgt somit erst am Ort der Betonzubereitung, wofür eine Vereinzelungseinrichtung gemäß Figur 8 zum Einsatz kommen kann. Hierbei handelt es sich um ein schnelllaufendes, gezahntes Rad 10, das die einzelnen Stahlfasern 2 abtrennt. Hierdurch ergibt sich weiter der Vorteil, dass, wenn die Vereinzelung am Ort der Betonzubereitung geschieht, die einzelnen Stahlfasern 2 homogener in den Beton eingebracht werden können, während sie sonst - wenn die Stahlfasern 2 bereits vereinzelt angeliefert werden - zu einer "Igelbildung" neigen und somit eine möglicherweise ungleichmäßige Verteilung im Beton aufweisen.

Es besteht jedoch auch die Möglichkeit, dass die Stahlfaseradern 4 in Längsrichtung des Blechbandes 1 ausgeformt werden, wie dies in der schematischen Darstellung der Figur 2 gezeigt ist. Grundsätzlich ist der Verfahrensablauf hier ähnlich; ergänzend ist hier ein weiteres Walzenpaar 11 vorgesehen, das nach dem Walkvorgang optional die Ober- und/oder die Unterseite des Bandes 1 in der Art einer Rändelung aufrauht. Dies ist jedoch grundsätzlich auch bei der ersten Variante des Verfahrensablaufs in einer ähnlichen Form möglich.

Hier werden jedoch im Anschluss an den Walkvorgang die in Längsrichtung des Bandes ausgerichteten Stahlfaseradern 4 bei 12 voneinander getrennt. Nach dieser Trennung erfolgt dann wiederum die Formgebung durch ein spezielles Formwerkzeug 13, das den Stahlfasern 2 die für den späteren Einsatzzweck erforderliche Formgebung verleiht.

Nach dieser Formgebung werden die Stahlfaseradern 4 auf das gewünschte Maß etwa durch eine Rotationsschere 14 abgelängt, so dass die Stahlfasern 2 bereits im vereinzelten Zustand abgepackt und zum späteren Einsatzort verbracht werden können. Das Stahlfaseradernband kann auch nach dem Walkprozess Lage auf Lage aufgewickelt werden und die Vereinzelung der Stahlfaser kann dann mit einer geeigneten Einrichtung, die trennt, umformt und ablängt, am Ort der Betonzubereitung vorgenommen werden.

Die Kerbung des Blechbandes 1 erfolgt V-förmig, wobei der Kerbwinkel W zwischen 30° und 120° liegen kann; bevorzugt ist ein Kerbwinkel W von etwa 60°.

Die Dicke des zunächst verbleibenden Steges 5 beträgt hierbei üblicherweise 20 % bis 95 % der Dicke des Bandes 1.

Die Tiefe der V-förmigen Kerben wird im Rahmen der Erfindung vorteilhafterweise so gewählt, daß sie der Festigkeit und dem Einsatzzweck der Stahlfaser entspricht.

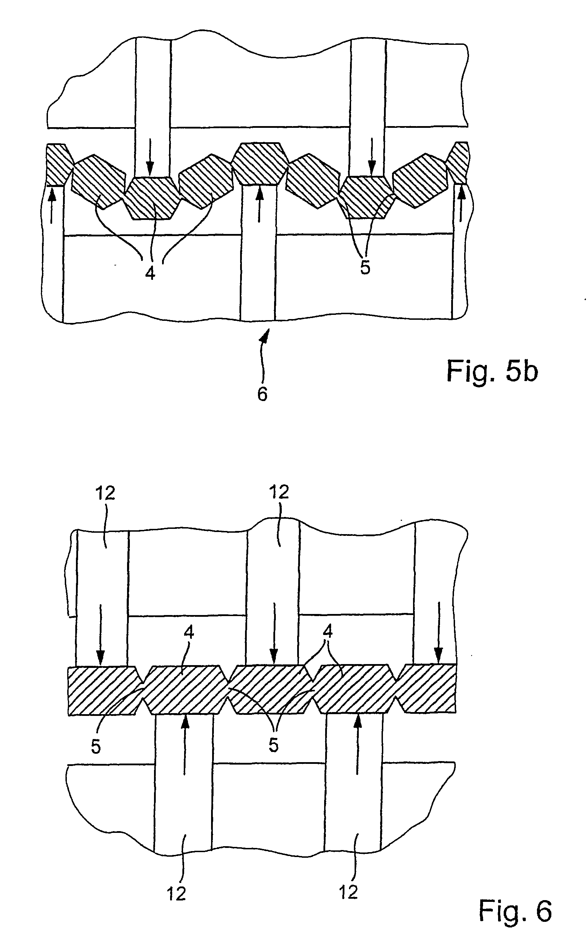

Der Walkprozess kann auf unterschiedliche Art und Weise ablaufen; so ist es zunächst denkbar, dass lediglich eine bezüglich der Ebene des Stahlfaserbandes 1 einseitige, mehrfache Biegeverformung erfolgt, bis es zum Dauerbruch im Bereich der Stege 5 kommt. Ebenso kann der Walkprozess jedoch auch eine bezüglich der Ebene des Stahlfaserbandes 1 beidseitige mehrfache Biegeverformung erfahren, wobei die mehrfache Biegeverformung der Stege 5 entweder um jeweils gleiche Winkelbeträge erfolgen kann oder aber um jeweils zunehmende oder abnehmende Winkelbeträge. Einzelheiten hierzu ergeben sich insbesondere auch aus den Fig. 5a und 5b.

Die mehrfache Biegeverformung der Stege 5 sollte in jedem Fall unter einem Winkel erfolgen, der kleiner als der Kerbwinkel W ist.

Die Trennstege bei den längs ausgerichteten Stahlfasern werden dann örtlich durch geringes, gegeneinander gerichtetes Auslenken von nebeneinander liegenden Stahlfaseradern quer zum Band 1 gebrochen, was durch entsprechende Formrollen erfolgen kann und in Fig. 6 dargestellt ist. Bei den quer ausgerichteten Stahlfasern erfolgt die Vereinzelung in der Trennvorrichtung (Fig. 8) als letzter Verfahrensschritt.

Als Vormaterial wird üblicherweise bandförmiges Halbzeug aus Metall eingesetzt, wobei sich hier insbesondere Werkstoffe auf Edelstahlbasis oder Eisenbasis in allen marktüblichen Festigkeitszuständen empfehlen. Soweit besondere Einsatzzwecke es erforderlich machen, können hierfür auch beschichtete Metallbänder, insbesondere verzinktes oder verkupfertes Stahlband zum Einsatz kommen. In jedem Fall ist es zweckmäßig, dass als metallisches Material Werkstoffe vorgesehen sind, mit denen für die jeweilige Werkstoffgruppe auch besonders hohe Festigkeitswerte durch Walzen erzielt werden können. Schließlich ist auch eine nach dem vorbeschriebenen Verfahren hergestellte Stahlfaser Gegenstand der Erfindung. Sie ist aus bandförmigem, als Vormaterial eingesetztem Halbzeug gebildet, das zur Ausbildung von zunächst noch durch Stege 5 miteinander verbundenen Stahlfaseradern 4 einseitig oder beidseitig gekerbt ist. Bei der Kerbung werden sie mit Verankerungen versehen. Die Verankerungen sind beim Kerben durch entsprechende Werkzeuggestaltung verbliebene größere Querschnittsbereiche der Stahlfaser, die bei der Kerbung sogar noch etwas aufgestaucht werden. Die Verankerungen werden bevorzugt an die Stahlfaserenden positioniert, wobei dazuhin noch die Möglichkeit bei der Stahlfaser quer besteht, das Stahlfaserende noch quer einzukerben und dabei noch etwas aufzustauchen.

Die Stege 5 sind durch mehrfache Biegeverformungen mittels eines Walkprozesses beidseitig durch Dauerbruch angerissen und der Stegrest - Trennsteg - später praktisch verformungsfrei getrennt, so daß die Trennflächen gratarm und bruchrauh sind.

Die Ober- und Unterseite der Stahlfasern können noch gerändelt sein und außerdem kann die Stahlfaser mit einer für die Beimengung zu Beton und dem Einsatzzweck geeignete Form versehen werden.

## Patentansprüche

1. Verfahren zur Herstellung von Stahlfasern, vorzugsweise zur Verwendung als Betonzusatzstoff, sowie zu deren Zuführung bei der Herstellung von Stahlfaserbeton, bei welchem zunächst ein Blechband (1) zur Formung der Stahlfasern (2) entweder einseitig oder beidseitig gekerbt wird, wodurch Stahlfaseradern (4) ausgebildet werden, die zunächst noch durch Stege (5) miteinander verbunden sind, wobei weiter zur anschließenden Umbildung der Stege (5) zu dünnen, leicht voneinander trennbaren und beim Abtrennen gratarme und bruchrauhe Trennflächen bildenden Trennstegen das Stahlfaserband einem Walkprozess unterworfen wird, bei welchem jeder Steg (5) einer mehrfachen Biegeverformung um seine Längsachse derart unterworfen wird, daß sich im Bereich der Stege (5) Anrisse durch Dauerbruch ausbilden und somit der Trennsteg entsteht, wobei die Stahlfaseradern (4) bei der Kerbung mit Verankerungen (7) versehen werden, die durch Unterbrüche bei der Kerbung gebildet werden.

2. Verfahren nach Anspruch 1, **dadurch gekennzeichnet, daß** die Stahlfaseradern (4) quer zur Längsrichtung des Blechbandes (1) ausgeformt werden.

3. Verfahren nach einem der Ansprüche 1 oder 2, **dadurch gekennzeichnet, daß** das nach der Kerbung sich über die gesamte Breite des Blechbandes (1) erstreckende Stahlfaseradernband (4) unter Bildung von zwei oder mehr Stahlfaserbändern durch Trennmesser (8) geteilt wird.

4. Verfahren nach Anspruch 3, **dadurch gekennzeichnet, daß** die Teilung des Stahlfaseradernbandes (4) vor dem Walkprozess (6) erfolgt.

5. Verfahren nach einem der Ansprüche 1 bis 4, **dadurch gekennzeichnet, daß** die Stahlfaserbänder nach dem Walkprozess eine Formwalze (9) zur Formgebung der Stahlfaseradern (4) entsprechend dem Einsatzzweck durchlaufen.

6. Verfahren nach einem der Ansprüche 1 bis 5, **dadurch gekennzeichnet, daß** die Stahlfaserbänder nach vollständiger Konfektionierung Lage auf Lage gewickelt werden.

7. Verfahren nach einem der Ansprüche 1 bis 6, **dadurch gekennzeichnet, daß** die Vereinzelung der Stahlfaserbänder zu Stahlfasern (2) am Ort der Betonzubereitung erfolgt.

8. Verfahren nach Anspruch 1, **dadurch gekennzeichnet, daß** die Stahlfaseradern (4) in Längsrichtung des Blechbandes (1) ausgeformt werden.

9. Verfahren nach einem der Ansprüche 1 oder 8, **dadurch gekennzeichnet, daß** nach dem Walkvorgang optional die Ober- und/oder die Unterseite des Bandes (1) in der Art einer Rändelung aufgeraut wird.

10. Verfahren nach einem der Ansprüche 1, 8 oder 9, **dadurch gekennzeichnet, daß** anschließend die in Längsrichtung des Bandes (1) ausgerichteten Stahlfaseradern (4) voneinander getrennt werden.

11. Verfahren nach einem der Ansprüche 1, 8, 9 oder 10, **dadurch gekennzeichnet, daß** die Stahlfaseradern (4) nach ihrer Trennung durch ein Formwerkzeug (13) einer Formgebung entsprechend dem Einsatzzweck unterworfen werden.

12. Verfahren nach einem der Ansprüche 1, 8, 9, 10 oder 11, **dadurch gekennzeichnet, daß** die Stahlfaseradern (4) nach ihrer Formgebung auf das gewünschte Maß der Stahlfaser (2) abgelängt werden.

13. Verfahren nach einem der Ansprüche 1 bis 12, **dadurch gekennzeichnet, daß** die Kerbung V-förmig erfolgt.

14. Verfahren nach Anspruch 13, **dadurch gekennzeichnet, daß** der Kerbwinkel W zwischen 30° und 120° beträgt.

15. Verfahren nach Anspruch 13, **dadurch gekennzeichnet, daß** der Kerbwinkel W etwa 60° beträgt.

16. Verfahren nach einem der Ansprüche 1 bis 15, **dadurch gekennzeichnet, daß** die Dicke des Steges (5) 20 % bis 95 % der Dicke des Bandes (1) beträgt.

17. Verfahren nach einem der Ansprüche 1 bis 15, **dadurch gekennzeichnet, daß** die Tiefe der V-förmigen Kerben in Abhängigkeit von der Festigkeit des Vormaterials und dem Einsatzzweck der Stahlfaser so gewählt wird, dass die Anrisse durch Dauerbruch erreicht werden.

18. Verfahren nach einem der Ansprüche 1 bis 17, **dadurch gekennzeichnet, daß** der Walkprozess eine bezüglich der Ebene des Stahlfaserbandes (1) einseitige, mehrfache Biegeverformung bis zu Dauerbruch anrissen im Bereich der Stege (5) umfaßt.

19. Verfahren nach einem der Ansprüche 1 bis 17, **dadurch gekennzeichnet, daß** der Walkprozess eine bezüglich der Ebene des Stahlfaserbandes (1) beidseitige, mehrfache Biegeverformung bis zu Dauerbruchanrissen im Bereich der Stege (5) umfaßt.

20. Verfahren nach einem der Ansprüche 1 bis 19, **dadurch gekennzeichnet, daß** die mehrfache Biegeverformung der Stege (5) um jeweils gleiche Winkelbeträge erfolgt.

21. Verfahren nach einem der Ansprüche 1 bis 19, **dadurch gekennzeichnet, daß** die mehrfache Biegeverformung der Stege (5) um jeweils zunehmende oder abnehmende Winkelbeträge erfolgt.

22. Verfahren nach einem der Ansprüche 1 bis 21, **dadurch gekennzeichnet, daß** die mehrfache Biegeverformung der Stege (5) unter einem Winkel kleiner als der Kerbwinkel W erfolgt.

23. Verfahren nach einem der Ansprüche 1 bis 22, **dadurch gekennzeichnet, daß** die Trennstege örtlich durch geringes, gegeneinander gerichtetes Auslenken von nebeneinander liegenden Stahlfaseradern (4) gebrochen werden.

24. Verfahren nach einem der Ansprüche 1 bis 23, **dadurch gekennzeichnet, daß** als Vormaterial bandförmiges Halbzeug aus Metall eingesetzt wird.

25. Aus mehreren parallel zueinander angeordneten, über Stege miteinander verbundenen Stahlfaseradern bestehendes, nach wenigstens einem der vorstehenden Verfahrensansprüche gefertigtes Stahlfaserband oder Stahlfaseradernband aus Metall, wobei bandförmiges, als Vormaterial eingesetztes Halbzeug, zur Ausbildung von zunächst noch durch Stege (5) miteinander verbundenen Stahlfaseradern (4) einseitig oder beidseitig gekerbt ist und bei der Kerbung mit Verankerungen versehen wird, wobei die Stege (5) durch mehrfache Biegeverformungen mittels eines Walkprozesses zu dünnen, leicht voneinander trennbaren und beim Abtrennen gratarme und bruchrauhe Trennflächen bildenden, Anrisse durch Dauerbruch aufweisenden Trennstegen umgeformt sind und die Stahlfaseradern (4) und die Stahlfaserbänder einer Formgebung unterworfen sind, wodurch beim Vereinzelungsvorgang der Stahlfaser aus dem Stahlfaserband (4) bzw. dem Stahlfaseradernband als Beimengung zu Beton geeignete Stahlfasern (2) gebildet werden.

26. Stahlfaserband bzw. Stahlfaseradernband nach Anspruch 25, **dadurch gekennzeichnet, daß** als metallisches Material Werkstoffe auf Edelstahlbasis oder Eisenbasis vorgesehen sind.

27. Stahlfaserband bzw. Stahlfaseradernband nach Anspruch 25, **dadurch gekennzeichnet, daß** als metallisches Material beschichtete Metallbänder, insbesondere verzinktes oder verkupfertes Stahlband vorgesehen sind.

28. Nach wenigstens einem der vorstehenden Verfahrensansprüche hergestellte Stahlfasern, wobei sie aus bandförmigem, als Vormaterial eingesetztem Halbzeug gebildet ist, das zur Ausbildung von zunächst noch durch Stege (5) miteinander verbundenen Stahlfaseradern (4) einseitig oder beidseitig gekerbt ist und bei der Kerbung mit Verankerungen versehen wird, wobei die Stege (5) durch mehrfache Biegeverformungen mittels eines Walkprozesses zu dünnen, leicht voneinander trennbaren und beim Abtrennen gratarme und bruchrauhe Trennflächen bildenden, einen Dauerbruch aufweisenden Trennstegen umgeformt sind.

29. Stahlfaser nach Anspruch 28, **dadurch gekennzeichnet, daß** sie eine für die Beimengung zu Beton geeignete, darin Verankerungen bildende Formgebung aufweist.

## Claims

1. A method of producing steel fibres, preferably for use as concrete additive, and for the supply thereof in the production of steel fibre concrete, in which to form the steel fibres (2) firstly a sheet metal strip (1) is notched either on one side or both sides, whereby steel fibre veins (4) are formed, which are initially still connected together by limbs (5), that further for subsequently converting the limbs (5) into thin easily mutually separable separation limbs forming separation surfaces which are fracture-rough and low in burring upon separation the steel fibre strip is subjected to a flexing process in which each limb (5) is subjected to multiple bending deformation about its longitudinal axis in such a way that incipient cracks are produced in the region of the limbs (5) due to fatigue fracture and thus the separation limb is produced, whereupon in the notching operation the steel fibre veins (4) are provided with anchorage means formed by interruptions in the notching operation.

2. A method according to claim 1 **characterised in that** the steel fibre veins (4) are shaped transversely to the longitudinal direction of the sheet metal strip (1).

3. A method according to one of claims 1 or 2 **characterised in that** the steel fibre vein strip (4) which after the notching operation extends over the entire width of the sheet metal strip (1) is divided by separation blades (8) forming two or more steel fibre strips.

4. A method according to claim 3 **characterised in that** division of the steel fibre vein strip (4) is effected prior to the flexing process (6).

5. A method according to one of claims 1 to 4 **characterised in that** after the flexing process the steel fibre strips pass through a shaping roller (9) for shaping the steel fibre veins (4) in accordance with the purpose of use.

6. A method according to one of claims 1 to 5 **characterised in that** after complete production the steel fibre strips are wound layer upon layer.

7. A method according to one of claims 1 to 6 **characterised in that** the operation of individually separating the steel fibre strips to afford steel fibres (2) is effected at the location of concrete preparation.

8. A method according to claim 1 **characterised in that** the steel fibre veins (4) are formed in the longitudinal direction of the sheet metal strip (1).

9. A method according to one of claims 1 or 8 **characterised in that** after the flexing process the top side and/or the underside of the strip (1) is optionally roughened up in the manner of knurling.

10. A method according to one of claims 1, 8 or 9 **characterised in that** then the steel fibre veins (4) oriented in the longitudinal direction of the strip (1) are separated from each other.

11. A method according to one of claims 1, 8, 9 or 10 **characterised in that** after their separation the steel fibre veins (4) are subjected by a shaping tool (13) to a shaping operation corresponding to the purpose of use.

12. A method according to one of claims 1, 8, 9, 10 or 11 **characterised in that** after their shaping the steel fibre veins (4) are cut to length to the desired measurement of the steel fibre (2).

13. A method according to one of claims 1 to 12 **characterised in that** the notching is effected in a V-shape.

14. A method according to claim 13 **characterised in that** the notch angle W is between 30° and 120°.

15. A method according to claim 13 **characterised in that** the notch angle W is about 60°.

16. A method according to one of claims 1 to 15 **characterised in that** the thickness of the limb (5) is 20% to 95% of the thickness of the strip (1).

17. A method according to one of claims 1 to 15 **characterised in that** the depth of the V-shaped notches is so selected corresponding to the strength of the starting material and the purpose of use of the steel fibre, that the fatique fracture is achieved.

18. A method according to one of claims 1 to 17 **characterised in that** the flexing process includes multiple bending deformation at one side with respect to the plane of the steel fibre strip (1) until incipient fatigue fracture in the region of the limbs (5).

19. A method according to one of claims 1 to 17 **characterised in that** the flexing process includes multiple bending deformation at both sides with respect to the plane of the steel fibre strip (1) until incipient fatigue fracture cracks occur in the region of the limbs (5).

20. A method according to one of claims 1 to 19 **characterised in that** the multiple bending deformation of the limbs (5) is effected through respectively identical angular amounts.

21. A method according to one of claims 1 to 19 **characterised in that** the multiple bending deformation of the limbs (5) is effected through respectively increasing or decreasing angular amounts.

22. A method according to one of claims 1 to 21 **characterised in that** the multiple bending deformation of the limbs (5) is through an angle less than the notch angle W.

23. A method according to one of claims 1 to 22 **characterised in that** the separation limbs are locally broken by slight oppositely directed deflection of mutually juxtaposed steel fibre veins (4).

24. A method according to one of claims 1 to 23 **characterised in that** semifinished material in strip form of metal is used as the starting material.

25. A steel fibre strip or steel fibre vein strip of metal which comprises a plurality of mutually parallel steel fibre veins connected together by way of limbs and which is produced in accordance with at least one of the preceding method claims, composed of semifinished material in strip form which is used as starting material and which for forming steel fibre veins (4) which are initially still connected together by limbs (5) is notched on one side or on both sides and in the notching operation is provided with anchorage means, wherein the limbs (5) are converted by multiple bending deformations by means of a flexing process to provide thin, easily mutually separable separation limbs which form low-burring and fracture-rough separation surfaces upon separation and which have a fatigue fracture and the steel fibre veins (4) and the steel fibre strips are subjected to a shaping operation whereby steel fibres (2) suitable as an additive to concrete are formed in the individual separation operation of the steel fibres from the steel fibre strip (4) or the steel fibre vein strip.

26. A steel fibre strip or steel fibre vein strip according to claim 25 **characterised in that** high-quality steel-based or iron-based materials are provided as the metallic material.

27. A steel fibre strip or steel fibre vein strip according to claim 25 **characterised in that** coated metal strips, in particular galvanised or copper-plated steel strip, are provided as the metallic material.

28. A steel fibre produced in accordance with at least one of the preceding method claims, formed from semifinished material in strip form which is used as the starting material and which for forming steel fibre veins (4) which are initially still connected together by limbs (5) is notched on one side or on both sides and is provided with anchorage means in the notching operation, wherein the limbs (5) are converted by multiple bending deformations by means of a flexing process to provide thin separation limbs which form easily mutually separable separation surfaces which have low burring and are fracture-rough upon separation, and which have a fatigue fracture.

29. A steel fibre according to claim 28 **characterised in that** it is of a shape suitable for addition to concrete, creating anchors therein.

## Revendications

1. Procédé pour la fabrication de fibres d'acier, de préférence en vue d'une utilisation comme matériau d'addition au béton, ainsi que pour leur addition lors de la production de béton à fibres d'acier, dans lequel on entaille d'abord soit sur un côté soit sur les deux côtés une bande de tôle (1) pour former les fibres d'acier (2), formant ainsi des brins de fibres d'acier (4) qui sont d'abord encore reliés les uns aux autres par des barrettes (5), dans lequel, pour la transformation ultérieure des barrettes (5) en minces lamelles de séparation aisément séparables l'une de l'autre et formant des faces de séparation brutes de rupture et sans bavures lors de la séparation, on soumet la bande de fibres d'acier à une opération de flexion alternée, au cours de laquelle chaque barrette (5) est soumise à une déformation de flexion multiple autour de son axe longitudinal, de telle manière que des amorces de fissures se forment par rupture de fatigue dans la région des barrettes (5) et qu'il apparaisse ainsi une lamelle de séparation, dans lequel les brins de fibres d'acier (4) sont, lors de l'entaillage, pourvus d'ancrages (7) qui sont formés par des interruptions lors de l'entaillage.

2. Procédé selon la revendication 1, **caractérisé en ce que** les brins de fibres d'acier (4) sont formés transversalement à la direction longitudinale de la bande de tôle (1).

3. Procédé selon l'une quelconque des revendications 1 ou 2, **caractérisé en ce que** l'on divise à l'aide de couteaux de refendage (8) la bande de brins de fibres d'acier (4) s'étendant sur toute la largeur de la bande de tôle (1) après l'entaillage avec formation de deux ou plus de deux bandes de fibres d'acier.

4. Procédé selon la revendication 3, **caractérisé en ce que** la division de la bande de brins de fibres d'acier (4) est effectuée avant l'opération de flexion alternée (6).

5. Procédé selon l'une quelconque des revendications 1 à 4, **caractérisé en ce que** les bandes de fibres d'acier traversent après l'opération de flexion alternée un rouleau de formage (9) pour former les brins de fibres d'acier (4) conformément à l'utilisation envisagée.

6. Procédé selon l'une quelconque des revendications 1 à 5, **caractérisé en ce que** les bandes de fibres d'acier sont enroulées couche sur couche après leur confection complète.

7. Procédé selon l'une quelconque des revendications 1 à 6, **caractérisé en ce que** la séparation des bandes de fibres d'acier en fibres d'acier (2) est effectuée sur le site de la préparation du béton.

8. Procédé selon la revendication 1, **caractérisé en ce que** les brins de fibres d'acier (4) sont formés dans la direction longitudinale de la bande de tôle (1).

9. Procédé selon l'une quelconque des revendications 1 ou 8, **caractérisé en ce que**, après l'opération de flexion alternée, la face supérieure et/ou inférieure de la bande (1) est en option rendue rugueuse à la manière d'un moletage.

10. Procédé selon l'une quelconque des revendications 1, 8 ou 9, **caractérisé en ce que** les brins de fibres d'acier (4) orientés dans la direction longitudinale de la bande (1) sont ensuite séparés les uns des autres.

11. Procédé selon l'une quelconque des revendications 1, 8, 9 ou 10, **caractérisé en ce que** les brins de fibres d'acier (4) sont soumis à un formage conformément à l'utilisation envisagée, au moyen d'un outil de formage (13) après leur séparation.

12. Procédé selon l'une quelconque des revendications 1, 8, 9, 10 ou 11, **caractérisé en ce que**, après leur formage, les brins de fibres d'acier (4) sont coupés à longueur à la dimension désirée des fibres d'acier (2).

13. Procédé selon l'une quelconque des revendications 1 à 12, **caractérisé en ce que** l'entaillage est effectué en forme de V.

14. Procédé selon la revendication 13, **caractérisé en ce que** l'angle d'entaille W vaut entre 30° et 120°.

15. Procédé selon la revendication 13, **caractérisé en ce que** l'angle d'entaille W vaut environ 60°.

16. Procédé selon l'une quelconque des revendications 1 à 15, **caractérisé en ce que** l'épaisseur de la barrette (5) vaut 20 % à 95 % de l'épaisseur de la bande (1).

17. Procédé selon l'une quelconque des revendications 1 à 15, **caractérisé en ce que** la profondeur des entailles en forme de V est choisie en fonction de la résistance du matériau d'ébauche et de l'utilisation envisagée des fibres d'acier, de telle manière que les amorces de fissures soient obtenues par rupture de fatigue.

18. Procédé selon l'une quelconque des revendications 1 à 17, **caractérisé en ce que** l'opération de flexion alternée comprend une déformation de flexion multiple, d'un seul côté par rapport au plan de la bande de fibres d'acier (1), jusqu'à l'apparition d'amorces de fissures par rupture de fatigue dans la région des barrettes (5).

19. Procédé selon l'une quelconque des revendications 1 à 17, **caractérisé en ce que** l'opération de flexion alternée comprend une déformation de flexion multiple, des deux côtés par rapport au plan de la bande de fibres d'acier (1), jusqu'à l'apparition d'amorces de fissures par rupture de fatigue dans la région des barrettes (5).

20. Procédé selon l'une quelconque des revendications 1 à 19, **caractérisé en ce que** la déformation de flexion multiple des barrettes (5) est effectuée chaque fois sous des valeurs angulaires égales.

21. Procédé selon l'une quelconque des revendications 1 à 19, **caractérisé en ce que** la déformation de flexion multiple des barrettes (5) est effectuée avec des valeurs angulaires croissantes ou décroissantes.

22. Procédé selon l'une quelconque des revendications 1 à 21, **caractérisé en ce que** la déformation de flexion multiple des barrettes (5) est effectuée sous un angle plus petit que l'angle d'entaille W.

23. Procédé selon l'une quelconque des revendications 1 à 22, **caractérisé en ce que** les lamelles de séparation sont rompues localement par une faible déviation, orientée en sens contraire, de brins de fibres d'acier (4) situés l'un à côté de l'autre.

24. Procédé selon l'une quelconque des revendications 1 à 23, **caractérisé en ce que** l'on utilise comme matériau d'ébauche un demi-produit en métal en forme de bande.

25. Bande de fibres d'acier ou bande de brins de fibres d'acier composée de plusieurs brins de fibres d'acier disposés parallèlement les uns aux autres et reliés les uns aux autres par des barrettes, fabriquée par au moins une des revendications de procédé précédentes, dans laquelle un demi-produit en forme de bande, utilisé comme matériau d'ébauche, est entaillé sur un côté ou sur les deux côtés pour former des brins de fibres d'acier (4) d'abord encore reliés les uns aux autres par des barrettes (5) et est doté d'ancrages lors de l'entaillage, dans lequel les barrettes (5) sont transformées, par des déformations de flexion multiples au moyen d'une opération de flexion alternée, en lamelles de séparation minces, aisément séparables les unes des autres, formant lors de la séparation des faces de séparation brutes de rupture et sans bavures et présentant des amorces de fissures par rupture de fatigue et les brins de fibres d'acier (4) et les bandes de fibres d'acier sont soumises à un formage, par lequel il se forme, lors de la séparation des fibres d'acier de la bande de fibres d'acier (4) ou de la bande de brins de fibres d'acier, des fibres d'acier (2) convenant comme addition au béton.

26. Bande de fibres d'acier ou bande de brins de fibres d'acier selon la revendication 25, **caractérisée en ce qu'**il est prévu comme matériau métallique des matériaux à base d'acier allié ou à base de fer.

27. Bande de fibres d'acier ou bande de brins de fibres d'acier selon la revendication 25, **caractérisée en ce qu'**il est prévu comme matériau métallique des bandes de métal revêtues, en particulier une bande de métal zinguée ou cuivrée.

28. Fibre d'acier fabriquée selon au moins une des revendications de procédé précédentes, qui est formée à partir d'un demi-produit en forme de bande utilisé comme matériau d'ébauche, qui est entaillé sur un côté ou sur les deux côtés pour former des brins de fibres d'acier (4) d'abord encore reliés les uns aux autres par des barrettes (5) et qui est doté d'ancrages lors de l'entaillage, dans laquelle les barrettes (5) sont transformées, par des déformations de flexion multiples au moyen d'une opération de flexion alternée, en lamelles de séparation minces, aisément séparables les unes des autres, formant lors de la séparation des faces de séparation brutes de rupture et sans bavures et présentant une rupture de fatigue.

29. Fibre d'acier selon la revendication 28, **caractérisée en ce qu'**elle présente une configuration formant des ancrages dans celle-ci et convenant pour l'addition au béton.
